# EUROPÄISCHE PATENTSCHRIFT

(11) **EP 0 614 755 B1**
(45) Veröffentlichungstag und Bekanntmachung des Hinweises auf die Patenterteilung: **11.11.1998**
(21) Anmeldenummer: 94102564.5
(22) Anmeldetag: 21.02.1994
(51) Int. Cl.: B32B 27/20, B65D 65/40

(54) **Siegelfähige orientierte Polyolefin-Mehrschichtfolie, Verfahren zu ihrer Herstellung und ihre Verwendung**
Sealable oriented polyolefinic multilayer film, process for its manufacture and its use
Film multicouche thermosoudable et orienté en polyoléfine, procédé pour sa préparation et son utilisation

(30) Priorität: 27.02.1993 DE 4306153
(43) Veröffentlichungstag der Anmeldung: 14.09.1994
(73) Patentinhaber: Hoechst Trespaphan GmbH, 66539 Neunkirchen (DE)
(72) Erfinder: Murschall, Ursula, Dr., D-55283 Nierstein (DE); Peiffer, Herbert, Dr., D-55126 Mainz (DE); Schlögl, Gunter, Dr., D-65779 Kelkheim (DE)
(74) Vertreter: Luderschmidt, Schüler & Partner GbR

(56) Entgegenhaltungen:
- EP-A- 0 142 784
- EP-A- 0 217 598
- EP-A- 0 273 680
- DE-A- 4 109 368
- US-A- 4 419 411
- US-A- 4 618 527
- GÄCHTER R./MÜLLER H. 'Taschenbuch der Kunststoff-Additive' 1989 , CARL HANSER VERLAG , MüNCHEN * Seite 568 - Seite 571 *
- CHEMICAL ABSTRACTS, vol. 106, no. 26, 29. Juni 1987, Columbus, Ohio, US; abstract no. 215579p, KITAMURA, N. 'Surface modification of fillers and pigments'
- DATABASE WPI Week 9321, 27. April 1993 Derwent Publications Ltd., London, GB; AN 93-172271 (21) & JP-A-5 104 621 (MITSUBISHI PLASTICS IND.)

## Beschreibung

Die Erfindung betrifft eine orientierte Polyolefin-Mehrschichtfolie, umfassend eine Basisschicht, die Polypropylen, ein tertiäres aliphatisches Amin und ein Amid einer Carbonsäure mit 8 bis 24 C-Atomen enthält, und mindestens eine siegelfähige Deckschicht die SiO₂ enthält. Die Folien zeichnen sich durch einen niedrigen Reibungskoeffizienten in Verbindung mit einer ausgezeichneten Siegelfähigkeit und hervorragenden Verarbeitungseigenschaften aus.

Im Stand der Technik sind Folien mit einem niedrigen Reibungskoeffizienten beschrieben. Die Anforderungen an die Verarbeitungsfähigkeit der Folien und deren Lauffähigkeit auf automatischen Maschinen sind im Laufe der Jahre ständig gestiegen. Aus diesem Grund werden immer niedrigere Reibungskoeffizienten gefordert, wobei heute der Begriff "niedrig" Reibungswerte in einer Größenordnung von 0,3 bis 0,1 umfaßt, wohingegen vor einigen Jahren eine Reibung von 0,4 bis 0,5 durchaus als ausgezeichnet niedrig galt.

Es ist aus dem Stand der Technik bekannt, Polyolefinfolien zur Verbesserung der Gleiteigenschaften ein Carbonsäureamid zuzusetzen. Die beschriebenen Folien enthalten Amide in den Deckschichten oder in der Basis- und den Deckschichten.

Die DE-A-20 01 032 beschreibt Folien aus verschiedenen thermoplastischen Kunststoffen, deren Gleiteigenschaften durch Zusatz von Carbonsäureamiden und Antiblockmitteln verbessert sind. Da in die Deckschichten alleine keine ausreichende Menge an Gleitmittel eingearbeitet werden kann, wird die zusätzliche Einarbeitung der Amide in die Basisschicht empfohlen. Diese Folien haben einen Reibungskoeffizienten im Bereich von 0,4 bis 0,8 und entsprechen damit nicht mehr den heutigen Qualitätsanforderungen.

Die US-A-4,117,193 beschreibt mehrschichtige Folien aus einer Polypropylen-Basisschicht, welche ein Gleitmittel und ein Antiblockmittel und ein Antistatikmittel enthält. Die Deckschicht dieser Folien besteht aus einem Polymerblend und enthält zusätzlich ein Gleitmittel und ein Antiblockmittel. Das Polymerblend besteht aus einem Ethylen-Butylen-Copolymer und einem polyolefinischen Harz wie HDPE oder LDPE. Es ist beschrieben, daß die mangelhaften Gleiteigenschaften der Folien durch den Zusatz von Gleit- und Antiblockmitteln alleine nicht genügend verbessert werden können. Aus diesem Grund wird die Deckschicht durch Zusatz von HDPE oder LDPE in Kombination mit einem Gleit- und Antiblockmittel modifiziert. Die Reduktion des Reibungskoeffizienten ist nach den Beispielen und Vergleichsbeispielen wesentlich auf den Zusatz von HDPE zurückzuführen. Reine Copolymer-Deckschichten mit gleicher Additivzusammensetzung weisen Reibungskoeffizienten von 0,7 bis 0,8 auf. Die Folien kombinieren hervorragende Reibungskoeffizienten mit einer guten Bedruckbarkeit. Sie sind jedoch durch den Zusatz des reibungsvermindernden polyolefinischen Harzes in der Trübung und im Glanz stark verbesserungsbedürftig.

Im Stand der Technik wird weiterhin als ausgezeichnetes Gleitmittel zur Realisierung von Reibungswerten kleiner als 0,3 der Zusatz von Silikonöl in polyolefinischen Folien beschrieben. Einige Schriften empfehlen die Verwendung des Silikonöls in Kombination mit anderen Gleitmitteln.

Die EP-A-0 182 463 beschreibt eine mehrschichtige Folie, welche 0,05 bis 0,2 Gew.-% tertiäres aliphatisches Amin in der Basisschicht und eine Kombination von Silikonöl und SiO₂ in der siegelfähigen Deckschicht enthält. Nach der Beschreibung erhält man durch das überraschende Zusammenwirken von SiO₂, Silikonöl und Amin in Verbindung mit einer ausgewählten Deckschichtdicke von kleiner als 0,8 µm Folien mit Reibungskoeffizienten von 0,3 und kleiner. Trotz dieses hervorragenden Reibungskoeffizienten sind die Verarbeitungseigenschaften der Folie mangelhaft. Sie ist insbesondere nicht bedruckbar und daher für viele Anwendungen nicht geeignet.

Die EP-A-0 143 130 offenbart Folien, die ein Carbonsäureamid in der Basisschicht und ebenfalls die Kombination von Silikonöl und SiO₂ in der Deckschicht enthalten. Ähnlich wie in der oben erwähnten EP-A-0 182 463 wird eine synergistische Wirkung der drei ausgewählten Komponenten auf den Reibungskoeffizienten beschrieben. Auch diese Folien sind trotz ihrer vorteilhaften Gleitfähigkeit mangelhaft in der Verarbeitung. Auch ihnen fehlt die wichtige Eigenschaft Bedruckbarkeit.

Die EP-A-0 194 588 und EP-A-0 217 598 beschreiben analog eine weiterentwikkelte Folie, welche trotz guter Gleiteigenschaften durch Silikonölzusatz gut bedruckbar ist. Bei diesen Folien wird nur in eine Deckschicht Silikonöl, gegebenenfalls in Kombination mit SiO₂, eingearbeitet. Die zweite silikonölfreie Deckschicht wird zur Verbesserung der Bedruckbarkeit coronabehandelt. Anschliessend erfolgt die Übertragung von Silikonöl auf die Oberfläche dieser behandelten zweiten Deckschicht durch Kontakt mit der silikonölhaltigen ersten Deckschicht. Durch diesen Kunstgriff erhält man eine mit Silikonöl ausgerüstete Folie mit guten Gleiteigenschaften, die gleichzeitig auf der coronabehandelten Seite gut bedruckbar und dennoch siegelfähig ist. Dieser Folie haftet der Nachteil an, daß sie nur einseitig bedruckbar ist. Dies ist besonders nachteilig für die Verwendung der Folie im Verpackungsbereich. Verpackungen benötigen auf ihrer zweiten Oberfläche häufig weitere Kennzeichnungen, beispielsweise eine Strichcodierung, und erfordern aus diesem Grund eine beidseitig bedruckbare Folie mit guten Gleiteigenschaften. Weiterhin hat es sich als nachteilig erwiesen, daß die Vorbehandlungsintensität der coronabehandelten Oberfläche durch das Siloxan nicht mehr meßbar ist. Dadurch ist es dem Folienverarbeiter nicht ohne weiteres möglich, die Oberflächenspannung der Folie und damit ein wichtiges Qualitätsmerkmal zu überprüfen. Auch die Verarbeitungseigenschaften der Folie sind noch verbesserungsbedürftig.

Die EP-0 273 680 betrifft eine siegelfähige Mehrschichtfolie mit niedrigem Reibungskoeffizienten, guten antistatischen und guten optischen Eigenschaften. Die Basissicht besteht aus kristallinem Polyolefin und antistatischen Additiven. Die siegelfähige Deckschicht enthält Antiblockmittel und Silikonöl in einer solchen Menge, daß Silikonöl von einer Folienoberfläche auf die andere Folienoberfläche übertragen werden kann.

US 4,618,527 beschreibt eine mehrschichtige Polyolefinfolie deren Basisschicht eine Kombination aus tertiärem aliphatischen Amin, Fettsäureamid und Monoester eines polyhydrischen Alkohols und einer Fettsäure enthält.

Der vorliegenden Erfindung liegt somit die Aufgabe zugrunde, eine mehrschichtige Polypropylenfolie zur Verfügung zu stellen, die einen niedrigen Reibungskoeffizienten aufweist. Die Folie soll im Hinblick auf ihre Verarbeitungseigenschaften gegenüber bekannten Folien verbessert sein. Weiterhin ist gefordert, daß die Folie siegelfähig und beidseitig bedruckbar ist. Die Vorbehandlungsintensität soll problemlos für den Verarbeiter meßbar sein. Diese Verbesserungen sollen jedoch das äußere Erscheinungsbild der Folie nicht beeinträchtigen, d.h. die Folie soll gleichzeitig eine möglichst niedrige Trübung und einen hohen Glanz aufweisen.

Erfindungsgemäß wird diese Aufgabe gelöst durch eine Folie der eingangs genannten Gattung, deren kennzeichnendes Merkmal darin besteht, daß das SiO₂ organisch nachbehandelt ist und die Mehrschichtfolie frei von Silikonöl ist und die Folie nach dem Bedrucken, Schneiden, Laminieren, Beschichten, Metallisieren und/oder Prägen, einen niedrigeren Reibungskoffezienten als vor der Verarbeitung aufweist, wobei der Reibungskoeffizient nach der Verarbeitung im Bereich von 0,12 bis 0,3 liegt.

Die Basisschicht der erfindungsgemäßen Mehrschichtfolie besteht im wesentlichen aus einem Propylenpolymer und gegebenenfalls zugesetzten Additiven in jeweils wirksamen Mengen. Das Polypropylenpolymere enthält zum überwiegenden Teil (mindestens 90 %) Propylen und besitzt einen Schmelzpunkt von 140°C oder höher, vorzugsweise 150 bis 170°C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 5 Gew.-% oder weniger, Copolymere von Propylen mit C₄-C₆-α-Olefinen mit einem α-Olefingehalt von 5 Gew.-% oder weniger stellen bevorzugte Propylenpolymere für die Basisschicht dar, wobei isotaktisches Polypropylen besonders bevorzugt ist. Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230 °C und einer Kraft von 21,6 N (DIN 53 735). Die angegebenen Gewichtsprozente beziehen sich auf das jeweilige Copolymer.

Unter siegelfähigen Olefinpolymeren werden im Rahmen der vorliegenden Erfindung Co- und Terpolymere des Propylens sowie Mischungen aus zwei oder mehreren dieser Co- und/oder Terpolymeren verstanden. Die Co- und Terpolymeren enthalten Propylen als Hauptkomponente in einer Menge von mindestens 50 Gew.-%, bezogen auf das jeweilige Polymere. Als Comonomere sind Ethylen und α-Olefine mit 4 bis 10 C-Atomen geeignet. Für die Erfindung hat sich die VerwendungvonPropylen-Ethylen-Copolymeren, Propylen-Butylen-Copolymeren und Propylen-Ohylen-Butylen-Terpolymeren sowie Mischungen aus diesen Propylenpolymeren als besonders vorteilhaft erwiesen.

Insbesondere sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren, oder ein Blend aus einem Ethylen-Propylen-Butylen-1-Terpolymeren und einem Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%, jeweils bezogen auf das Gesamtgewicht des Polymerblends, bevorzugt.

Die erfindungsgemäße Mehrschichtfolie umfaßt zumindest die vorstehend beschriebene Basisschicht und mindestens eine Deckschicht, welche die vorstehend beschriebenen Propylenpolymeren oder Mischungen daraus enthält. Je nach ihrem vorgesehenen Verwendungszweck kann die Mehrschichtfolie eine weitere Deckschicht auf der gegenüberliegenden Seite aufweisen. In einer bevorzugten Ausführungsform ist die Mehrschichtfolie dreischichtig, wobei gleiche oder verschiedene Deckschichten aufgebracht sein können.

Die Dicke der Deckschicht/en ist größer als 0,4 µm und liegt vorzugsweise im Bereich von 0,6 bis 4 µm, insbesondere 0,8 bis 2 µm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 70 µm, insbesondere 10 bis 50 µm, wobei die Basisschicht etwa 50 bis 90 % der Gesamtfoliendicke ausmacht.

Es ist erfindungswesentlich, daß die Mehrschichtfolie im wesentlichen frei von Silikonöl ist. Es wurde gefunden, daß silikonölfreie Folien eine Reihe von Vorteilen bieten und überraschenderweise dennoch ein sehr niedriger Reibungskoeffizient der siegelfähigen Deckschicht im Bereich von kleiner 0,3 erzielt werden kann. Ohne Silikonöl kann die Folie problemlos coronabehandelt werden, ohne die Siegelfähigkeit der Deckschicht zu beeinträchtigen. Die Behandlungsintensität ist problemlos meßbar, ohne daß der Silikonölbelag in einem zusätzlichen Arbeitsschritt entfernt werden muß. Ohne Silikonöl haftet eine Strichcodierung auf der Folienverpackung gut. Völlig unerwartet zeigt die Folie gemäß Anspruch 1 ohne Silikonöl hervorragende Verarbeitungseigenschaften.

Es ist weiterhin erfindungswesentlich, daß die Folie in ihrer Basis eine Kombination von tertiärem aliphatischem Amin und Amid einer wasserlöslichen Carbonsäure mit 8 bis 24 C-Atomen enthält und in mindestens einer Deckschicht SiO₂ aufweist. Überraschenderweise ist es mit dieser Additivkombination möglich, ohne zusätzliche Gleitmittel wie Silikonöl oder polyolefinische Harze den Reibungskoeffizienten der Polypropylenfolie auf Werte von 0,2 bis 0,3 zu erniedrigen. Damit wird eine Folie zur Verfügung gestellt, welche die geforderten Gleiteigenschaften aufweist, welche aber nicht mehr mit den Nachteilen der bekannten Folien mit niedrigem Reibungskoeffizienten behaftet, insbesondere problemlos bedruckbar ist und hervorragende Werte für Glanz und Trübung zeigt.

Als Carbonsäureamide sind Amide einer wasserlöslichen Carbonsäure mit 8 bis 24 C-Atomen oder Mischungen dieser Amide umfaßt. Insbesondere sind Erucasäureamid, Ölsäureamid, Stearinsäureamid und ähnliche bevorzugt. Es hat sich als besonders vorteilhaft erwiesen, das Amid nur in die Basisschicht der Mehrschichtfolie einzuarbeiten, bevorzugt in einer Menge von 0,05 bis 0,3 Gew.-%; besonders günstig ist eine Menge von 0,10 bis 0,25 Gew.-% (bezogen auf die Basisschicht).

Tertiäre aliphatische Amine umfassen Verbindungen der allgemeinen Formel R₃N, worin R einen Fettsäurerest oder einen C₁₂-C₁₈-Alkylrest oder einen hydroxysubstituierten Alkylrest bedeutet, wobei die Reste R gleich oder verschieden sein können. Hydroxy-substituierte Alkylreste sind bevorzugt Hydroxyethyl-, Hydroxypropyl-oder Hydroxybutylreste. Besonders bevorzugt sind N,N-bis(2-hydroxyethyl)-alkylamine. Die tertiären aliphatischen Amine werden besonders günstig in einer Menge von 0,03 bis 0,25 Gew.-% eingesetzt, wobei 0,1 bis 0,15 Gew.-% besonders vorteilhaft sind.

Die Deckschicht enthält 0,1 bis 0,5 Gew.-% SiO₂, welches organisch nachbehandelt ist und welches einen mittleren Teilchendurchmesser von 3 bis 6 µm aufweist, wobei das Verhältnis von Teilchendurchmesser und Deckschichtdicke im Bereich von 3 bis 11 liegen soll, vorzugweise etwa 4 bis 10, insbesondere 6 bis 8, beträgt. SiO₂ wird im allgemeinen durch Mahlung von Silica-Gel hergestellt und ist eine synthetisch hergestellte hochporöse, reine Kieselsäure, welche eine völlig amorphe Struktur im Gegensatz zu kristallinen Kieselsäuren aufweist. Der SiO₂-Gehalt liegt im allgemeinen über 95 %, insbesondere im Bereich von 98 bis 99,5 %. Erfindungsgemäß sind die SiO₂-Teilchen organisch nachbehandelt und weisen eine Beschichtung auf, welche 0,5 bis 5 Gew.-% einer aliphatischen Carbonsäure, bezogen auf das Gewicht der Teilchen, enthält. Als aliphatische Carbonsäuren sind aliphatische Hydroxydi- und -tricarbonsäuren oder Stearinsäure bevorzugt. Im allgemeinen weisen die Säuren zwei bis fünf, bevorzugt zwei bis drei, Hydroxygruppen auf. Als aliphatische Carbonsäuren sind Tartronsäure (Hydroxymalonsäure), Äpfelsäure (Monohydroxybernsteinsäure), Weinsäure (Dihydroxybernsteinsäure) und Citronensäure bevorzugt. Als ganz besonders vorteilhaft haben sich citronensäurehaltige Beschichtungen erwiesen. Aufgrund der organischen Beschichtung reagieren die SiO₂-Teilchen in wäßrigen Lösungen leicht sauer. Der pH-Wert einer 5%igen wäßrigen Suspension liegt in einem Bereich von 3 bis 5, bevorzugt beträgt er 4.

Neben diesen ausgewählten Additiven kann die erfindungsgemäße Mehrschichtfolie zusätzlich Neutralisationsmittel und Stabilisator enthalten.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxy-benzyl)benzol sind besonders vorteilhaft.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können oder als solche der Polymerschmelze zugesetzt werden. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 8:1 bis 10:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 140 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 50 bis 110 °C zu halten.

Die Temperaturen, bei denen Längs- und Querstreckung durchgeführt werden, können variieren. Im allgemeinen wird die Längsstreckung vorzugsweise bei 120 bis 150 °C und die Querstreckung vorzugsweise bei 155 bis 190 °C.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie zeichnet sich durch einen sehr guten Reibungskoeffizienten (0,2 bis 0,3) der siegelfähigen Deckschicht in Verbindung mit guten Siegeleigenschaften aus. Zusätzlich ist die Folie sehr gut und (beidseitig) bedruckbar. Sie weist damit eine Kombination von Eigenschaften auf, die nebeneinander nicht ohne weiteres realisierbar sind, ohne daß andere Eigenschaften nachteilig beeinflußt werden. Die Folie ist weiterhin gegenüber bekannten Folien in ihrem Glanz und in ihrer Trübung verbessert. Besondere Vorteile weist die Folie bezüglich ihrer Verarbeitungseigenschaften auf. Unter der Verarbeitung der Folie wird im allgemeinen jede Maßnahme verstanden, welche an der fertigen Folie nach ihrer Herstellung ausgeführt wird, beispielsweise das Bedrucken, Schneiden, Laminieren, Beschichten, Metallisieren und/oder Prägen der Folie oder auch ihre Verarbeitung auf beliebigen Packmaschinen. Es wurde gefunden, daß ein niedriger Reibungskoeffizient der siegelfähigen Deckschicht alleine gute Verarbeitungseigenschaften nicht sicher gewährleistet. Es wurde entdeckt, daß der Reibungskoeffizient vieler Folien während der Verarbeitungsschritte wie Bedrucken und Kaschieren ansteigt. Überraschenderweise zeigen die Folien mit der erfindungsgemäßen Additivkombination einen Reibungskoeffizienten der siegelfähigen Deckschicht, der nach der Verarbeitung niedriger ist als vorher. Durch diesen unerwarteten Effekt ist die Folie in ihren Gleiteigenschaften nach der Verarbeitung denen des Standes der Technik deutlich überlegen. Weder die Bedeutung der Beständigkeit des Reibungskoeffizienten bei der Verarbeitung noch die gezielte Realisierung von verarbeitungsbeständigen Gleiteigenschaften waren bisher bekannt.

Die Erfindung wird nun anhand von Ausführungsbeispielen noch näher erläutert.

### Beispiel 1

Es wurde durch Coextrusion und anschließende stufenweise Orientierung in Längs- und Querrichtung eine dreischichtige Folie mit einer Gesamtdicke von 20 µm und einem Schichtaufbau ABA hergestellt, d. h. die Basisschicht war von zwei gleichen Deckschichten A umgeben. Die Deckschichten hatten eine Dicke von jeweils 0,7 µm. Die Folie wurde vor der Aufrollung einer beidseitigen Coronabehandlung unterzogen. Die Oberflächenspannung der Folie betrug beidseitig infolge dieser Behandlung 39 bis 40 mN/m.

Alle Schichten enthielten zur Stabilisierung 0,13 Gew.-% Pentaerythrityl-Tetrakis-4-(3,5-ditertiärbutyl-4-hydroxyphenyl)-propionat (®Irganox 1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 4 Gew.-% und einem Schmelzpunkt von 160 bis 162 °C. Der Schmelzflußindex des Polypropylenhomopolymeren betrug 3,2 g/10 min bei 230 °C und 21,6 N Belastung (DIN 53 735). Die Basisschicht enthielt 0,11 Gew.-% N,N-bis-(2-hydroxyethyl)-(C₁₂-C₁₈)-alkylamin (®Armostat 300) und 0,14 Gew.-% Erucasäureamid mit einem Schmelzpunkt von 78 bis 82 °C.

Die polyolefinischen Deckschichten bestanden im wesentlichen aus einem Ethylen-Propylen-Butylen-1-Terpolymeren mit einem Gehalt von 3 Gew.-% Ethylen, 89,0 Gew.-% Propylen und 8 Gew.-% Butylen-1.

Die Deckschichten enthielten 0,33 Gew.-% eines mit einer organischen Säure organisch nachbehandelten Siliciumdioxids mit einem mittleren Teilchendurchmesser von 4 µm.

### Beispiel 2

Beispiel 1 wurde wiederholt. Die Basisschicht enthielt jedoch 0,05 Gew.-% des tertiären aliphatischen Amins N,N-bis-(2-hydroxyethyl)-(C₁₂-C₁₈)-alkylamin und 0,17 Gew.-% Erucasäureamid.

### Beispiel 3

Beispiel 1 wurde wiederholt. Die polyolefinischen Deckschichten bestanden jedoch im wesentlichen aus einem statistischen Ethylen-Propylen-Butylen-1-Terpolymeren mit einem Gehalt von 4 Gew.-% Ethylen, 90 Gew.-% Propylen und 6 Gew.-% Butylen-1. Die Deckschichten enthielten wie in Beispiel 1 0,33 Gew.-% des organisch nachbehandelten Siliciumdioxids.

### Beispiel 4

Beispiel 1 wurde wiederholt. Die polyolefinischen Deckschichten bestanden jedoch im wesentlichen aus einem statistischen Ethylen-Propylen-Copolymeren mit einem Gehalt von 4,5 Gew.-% Ethylen und 95,5 Gew.-% Propylen. Die Deckschichten enthielten wie in Beispiel 1 0,33 Gew.-% des organisch nachbehandelten Siliciumdioxids.

### Vergleichsbeispiel 1

Beispiel 1 wurde wiederholt. Die Deckschichten bestanden wie in Beispiel 1 im wesentlichen aus einem statistischen Ethylen-Propylen-Butylen-1-Terpolymeren. Die Deckschichten enthielten jedoch kein Siliciumdioxid.

### Vergleichsbeispiel 2

Beispiel 1 wurde wiederholt. Die Basisschicht enthielt jedoch kein Erucasäureamid.

### Vergleichsbeispiel 3

Beispiel 1 wurde wiederholt. Die Basisschicht enthielt jedoch kein N,N-bis-(2-hydroxyethyl)-(C₁₂-C₁₈)-alkylamin.

### Vergleichsbeispiel 4

Beispiel 1 wurde wiederholt. Die Deckschichten enthielten 0,33 Gew.-% des organisch nachbehandelten Siliciumdioxids und 1,0 Gew.-% Polydimethylsiloxan (Siliconöl) mit einer kinematischen Viskosität von 30 000 mm²/s bei 25 °C.

### Vergleichsbeispiel 5

Es wurde eine Dreischichtfolie mit einem ABA-Aufbau entsprechend Beispiel 1 der EP-A-0 182 463 hergestellt. Die Folie war nicht coronabehandelt.

### Vergleichsbeispiel 6

Vergleichsbeispiel 5 wurde wiederholt. Die Folie wurde jedoch vor der Aufrollung einer beidseitigen Coronabehandlung unterzogen.

### Vergleichsbeispiel 7

Es wurde eine Dreischichtfolie mit einem ABC-Aufbau entsprechend Beispiel 1 der EP-A-0 194 588 hergestellt. Die erste Seite, die kein Siliconöl enthielt, war nach der EP-A-0 194 588 coronabehandelt.

Die Eigenschaften der Folien gemäß den Beispielen und Vergleichsbeispielen sind in den nachstehenden Tabellen 1 und 2 zusammengestellt.

Zur Charakterisierung der Rohstoffe und der Folien wurden die folgenden Meßmethoden benutzt:

### Schmelzflußindex

Der Schmelzflußindex wurde in Anlehnung an DIN 53 735 bei 21,6 N Belastung und 230 °C bzw. bei 50 N Belastung und 190 °C gemessen.

### Schmelzpunkt

DSC-Messung, Maximum der Schmelzkurve, Aufheizgeschwindigkeit 20 °C/min.

### Trübung

Die Trübung der Folie wurde in Anlehnung an ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportio-nale elektrische Größe angezeigt. Der Meßwert ist dimensionslos und muß mit dem Einstrahlwinkel angegeben werden.

### Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 mm² (Gerät: Brugger Typ NDS, einseitig beheizte Siegelbacke) versiegelt. Die Siegelnahtfestigkeit wurde nach der T-Peel-Methode bestimmt.

### Reibung

Die Reibung der siegelfähigen Deckschicht wurde nach DIN 53 375 bestimmt.

### Oberflächenspannung

Die Oberflächenspannung wurde mittels der sogenannten Tintenmethode (DIN 53 364) bestimmt. Konnte die Oberflächenspannung ohne Probleme gemessen werden, so wurde deren Meßbarkeit mit gut (+ +) beurteilt. War die Messung nur nach Abwaschen mit n-Heptan möglich, so gilt die Meßbarkeit als mäßig (+-). Ergab die Messung trotz Abwaschen mit n-Heptan nicht reproduzierbare Zufallswerte, so wird die Meßbarkeit mit schlecht (--) beurteilt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband keine Farbe abgelöst werden, so wurde die Farbhaftung mit gut (+ +), bei wenig Farbablösung mit mäßig (+-) und bei deutlicher Farbablösung mit schlecht (--) beurteilt.

### Bestimmung der Siegelanspringtemperatur:

Mit dem Siegelgerät HSG/ET der Fa. Brugger werden heiβgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm² und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

**TABELLE 1**

| | Vorbehandlungsintensität 14 Tage nach Produktion [mN/m] | | Bedruckbarkeit | | Reibungskoeffizient 14 Tage nach Produktion | Reibungskoeffiezient (14 Tage nach Produktion) nach dem Drucken und Kaschieren |
|---|---|---|---|---|---|---|
| | 1. Seite | 2. Seite | 1. Seite | 2. Seite | | |
| B1 | 39 | 39 | ++ | ++ | 0,20 | 0,16 |
| B2 | 39 | 39 | ++ | ++ | 0,20 | 0,15 |
| B3 | 38 | 38 | ++ | ++ | 0,22 | 0,18 |
| B4 | 39 | 39 | ++ | ++ | 0,20 | 0,17 |
| VB1 | 39 | 39 | ++ | ++ | Folie blockt >0,5 | Folie blockt >0,5 |
| VB2 | 39 | 39 | ++ | ++ | Folie blockt >0,5 | Folie blockt >0,5 |
| VB3 | 38 | 39 | ++ | ++ | 0,26* | 0,24* |
| VB4 | -- | -- | -- | -- | Folie blockt 0,4-0,5 | Folie blockt >0,5 |
| VB5 | -- | -- | -- | -- | 0,24 | 0,35 |
| VB6 | -- | -- | -- | -- | Folie blockt 0,4-0,5 | Folie blockt >0,5 |
| VB7 | 38** | -- | +- | -- | 0,28 | 0,5 |

| | | | | | | |
|---|---|---|---|---|---|---|
| * Die Folie ist statisch aufgeladen und läßt sich schlecht verarbeiten. | | | | | | |
| ** Die Vorbehandlungsintensität ist nur nach Abwaschen des Siliconöls mit n-Heptan meßbar. | | | | | | |

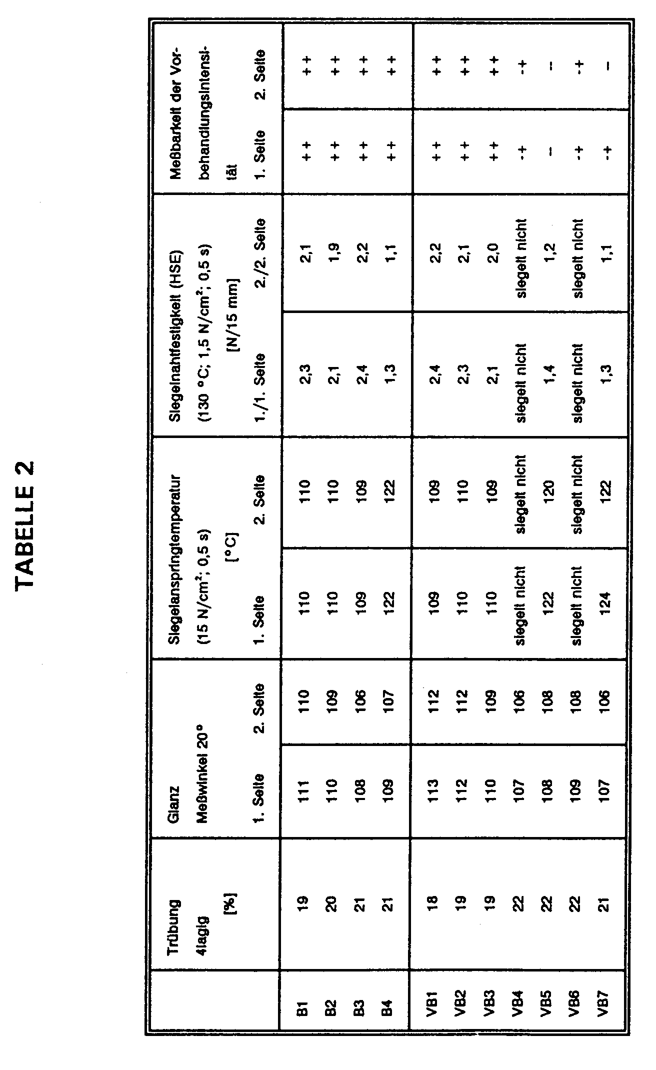

## Patentansprüche

1. Orientierte Polyolefin-Mehrschichtfolie, umfassend eine Basisschicht, die Polypropylen, ein tertiäres aliphatisches Amin und ein Amid einer Carbonsäure mit 8 bis 24 C-Atomen enthält, und mindestens eine siegelfähige Deckschicht, die SiO₂ enthält, dadurch gekennzeichnet, daß das SiO₂ mit einer Beschichtung nachbehandelt ist, welche 0,5 bis 5 Gew.-% einer aliphatischen Carbonsäure, bezogen auf das Gewicht der Teilchen, enthält, und die Mehrschichtfolie frei von Silikonöl ist und die Folie nach dem Bedrucken, Schneiden, Laminieren, Beschichten, Metallisieren und/oder Prägen einen niedrigeren Reibungskoeffizienten als vor der Verarbeitung aufweist, wobei der Reibungskoeffizient nach der Verarbeitung im Bereich von 0,12 bis 0,3 liegt.

2. Polyolefin-Mehrschichtfolie nach Anspruch 1, dadurch gekennzeichnet, daß das SiO₂ einen mittleren Teilchendurchmesser von 2 bis 5 µm aufweist.

3. Polyolefin-Mehrschichtfolie nach einem der Ansprüche 1 oder 2, dadurch gekennzeichnet, daß die Basisschicht 0,03 bis 0,25 Gew.-% (bezogen auf die Basisschicht) tertiäres aliphatisches Amin enthält.

4. Polyolefin-Mehrschichtfolie nach einem oder mehreren der Ansprüche 1 bis 3, dadurch gekennzeichnet, daß die Basisschicht 0,1 bis 0,3 Gew.-% (bezogen auf die Basisschicht) Amid enthält.

5. Polyolefin-Mehrschichtfolie nach einem oder mehreren der Ansprüche 1 bis 4, dadurch gekennzeichnet, daß die Deckschicht 0,2 bis 0,5 Gew.-% (bezogen auf die Deckschicht) SiO₂ enthält.

6. Polyolefin-Mehrschichtfolie nach einem oder mehreren der Ansprüche 1 bis 5, dadurch gekennzeichnet, daß die Verarbeitung die Bedruckung oder Kaschierung der Mehrschichtfolie umfaßt.

7. Verfahren zur Herstellung der Polyolefin-Mehrschichtfolie nach Anspruch 1 bei dem die den einzelnen Schichten der Folie entsprechenden Schmelzen durch eine Flachdüse coextrudiert werden, die coextrudierte Folie über eine Abzugswalze, deren Temperatur zwischen 80 und 110 C liegt, abgezogen wird, die Folie biaxial gestreckt wird mit einem Längsstreckverhältnis von 4:1 bis 7:1 und einem Querstreckverhältnis von 8:1 bis 10:1, die biaxial gestreckte Folie thermofixiert und anschließend aufgewickelt wird.

8. Verfahren nach Anspruch 7, dadurch gekennzeichnet, daß mindestens eine Oberfläche der Folie coronabehandelt wird.

9. Verwendung einer Polyolefin-Mehrschichtfolie nach einem oder mehreren der Ansprüche 1 bis 6 als Verpackungsfolie.

10. Verwendung einer Polyolefin-Mehrschichtfolie nach einem oder mehreren der Ansprüche 1 bis 6 zur Weiterverarbeitung, vorzugsweise zur Bedruckung und/oder Kaschierung.

11. Laminat, umfassend eine Polyolefin-Mehrschichtfolie nach einem oder mehreren der Ansprüche 1 bis 6 und Papier oder Pappe oder mindestens eine weitere Folie aus thermoplastischem Kunststoff.

12. Verfahren zur Weiterverarbeitung einer Polyolefin-Mehrschichtfolie nach Anspruch 1, dadurch gekennzeichnet, daß die Folie einem Verarbeitungsschritt unterworfen wird und daß die Folie nach der Verarbeitung einen niedrigeren Reibungskoeffizienten als vor der Verarbeitung aufweist.

13. Verfahren nach Anspruch 12, dadurch gekennzeichnet, daß der Reibungskoeffizient der Folie nach der Verarbeitung <0,3, vorzugsweise 0,12 bis <0,3, beträgt und der Verarbeitungsschritt das Bedrucken, Schneiden, Laminieren, Beschichten, Metallisieren und/oder Prägen und/oder die Verarbeitung auf Packmaschinen umfaßt.

## Claims

1. An oriented multi-layer polyolefin film comprising a base layer comprising a tertiary aliphatic amine and an amide of a carboxylic acid with 8 to 24 carbon atoms, and at least one sealable outer layer which contains SiO₂, characterised in that the SiO₂ is reprocessed with a coating which contains 0.5 to 5% by weight of an aliphatic carboxylic acid, based on the weight of the particles and the multi-layer film is free from silicon oil and in that after being printed on, cut, laminated, coated, metallised and/or embossed, the film has a lower coefficient of friction than prior to processing, the coefficient of friction following processing being in the range from 0.12 to 0.3.

2. A multi-layer polyolefin film according to claim 1, characterised in that the SiO₂ has a mean particle diameter of 2 to 5 µm.

3. A multi-layer polyolefin film according to one of claims 1 or 2, characterised in that the base layer contains 0.03 to 0.25% by weight (based on the weight of the base layer) of tertiary aliphatic amine.

4. A multi-layer polyolefin film according to one or more of claims 1 to 3, characterised in that the base layer contains 0.1 to 0.3% by weight (based on the weight of the base layer) of amide.

5. A multi-layer polyolefin film according to one or more of claims 1 to 4, characterised in that the outer layer contains 0.2 to 0.5% by weight (based on the weight of the outer layer).

6. A multi-layer polyolefin film according to one or more of claims 1 to 5, characterised in that the processing comprises the printing or lining of the multi-layer film.

7. A process for the production of the multi-layer polyolefin film according to clam 1 in which the melts corresponding to the individual layers of the film are coextruded through a flat-film die, the coextruded film is taken over via a take-off roll whose temperature is between 80 and 110°C, the film is biaxially stretched at a longitudinal stretching ratio of from 4:1 to 7:1 and transverse stretching ratio of from 8:1 to 10:1, the biaxially stretched film is thermofixed and subsequently wound up.

8. A process according to claim 7, characterised in that at least one surface of the film is corona-treated.

9. Use of a multi-layer polyolefin film according to one or more of claims 1 to 6 as a packaging film.

10. Use of a multi-layer polyolefin film according to one or more of claims 1 to 6 for further processing, preferably for printing and/or lining.

11. A laminate comprising a multi-layer polyolefin film according to one or more of claims 1 to 6 and paper or cardboard or at least one further film of a synthetic thermoplastics substance.

12. A process for further processing a multi-layer polyolefin film according to claim 1, characterised in that the film is subjected to a processing stage and in that after processing the film has a lower coefficient of friction than prior to processing.

13. A process according to claim 12, characterised in that after processing the coefficient of friction of the film is < 0.3, preferably 0.12 to < 0.3, and in that the processing stage comprises printing, cutting, laminating, coating, metallising and/or embossing and/or the processing on packaging machines.

## Revendications

1. Feuille multicouche en polyoléfine, orientée, comprenant une couche de base, qui contient du polypropylène, une amine aliphatique tertiaire et un amide d'un acide carboxylique comportant 8 à 24 atomes de carbone, et au moins une couche de recouvrement scellable, qui contient du SiO₂, caractérisée en ce que le SiO₂ est ultérieurement traité par un revêtement qui contient 0,5 à 5 % en poids d'un acide carboxylique aliphatique, par rapport au poids des particules, en ce que la feuille multicouche est exemple d'huile de silicone et en ce que la feuille présente, après l'impression, le découpage, la stratification, le revêtement, la métallisation et/ou l'estampage, un coefficient de frottement plus bas qu'avant le traitement, le coefficient de frottement étant, après le traitement, de l'ordre de 0,12 à 0,3.

2. Feuille multicouche en polyoléfine suivant la revendication 1, caractérisée en ce que le SiO₂ présente un diamètre moyen des particules de 2 à 5 µm.

3. Feuille multicouche en polyoléfine suivant l'une des revendications 1 et 2, caractérisée en ce que la couche de base contient 0,03 à 0,25 % en poids (par rapport à la couche de base) d'amine aliphatique tertiaire.

4. Feuille multicouche en polyoléfine suivant une ou plusieurs des revendications 1 et 3, caractérisée en ce que la couche de base contient 0,1 à 0,3 % en poids (par rapport à la couche de base) d'amide.

5. Feuille multicouche en polyoléfine suivant une ou plusieurs des revendications 1 et 4, caractérisée en ce que la couche de recouvrement contient 0,2 à 0,5 % en poids (par rapport à la couche de recouvrement) de SiO₂.

6. Feuille multicouche en polyoléfine suivant une ou plusieurs des revendications 1 et 5, caractérisée en ce que le traitement comprend l'impression ou le contrecollage de la feuille multicouche.

7. Procédé de préparation de la feuille multicouche en polyoléfine suivant la revendication 1, dans lequel les masses fondues correspondant aux différentes couches de la feuille sont coextrudées à travers une filière plate, la feuille coextrudée est soutirée sur un rouleau de soutirage, dont la température se situe entre 80 et 110°C, la feuille est étirée biaxialement avec un rapport d'étirage longitudinal de 4/1 à 7/1 et un rapport d'étirage transversal de 8/1 à 10/1, la feuille étirée biaxialement est thermofixée et ensuite elle est enroulée.

8. Procédé suivant la revendication 7, caractérisé en ce qu'au moins une surface de la feuille est soumise à un traitement à effet de couronne.

9. Utilisation d'une feuille multicouche en polyoléfine suivant une ou plusieurs des revendications 1 à 6, comme feuille d'emballage.

10. Utilisation d'une feuille multicouche en polyoléfine suivant une ou plusieurs des revendications 1 à 6, pour un traitement ultérieur, de préférence pour l'impression et/ou le contrecollage.

11. Stratifié, comprenant une feuille multicouche en polyoléfine suivant une ou plusieurs des revendications 1 à 6, et du papier ou carton ou au moins une autre feuille en matière synthétique thermoplastique.

12. Procédé de traitement ultérieur d'une feuille multicouche en polyoléfine suivant la revendication 1, caractérisé en ce que la feuille est soumise à une étape de traitement et en ce que la feuille, après le traitement, présente un coefficient de frottement inférieur à celui avant le traitement.

13. Procédé suivant la revendication 12, caractérisé en ce que le coefficient de frottement de la feuille après le traitement est <0,3, de préférence de 0,12 à <0,3 et en ce que l'étape de traitement comporte l'impression, la découpe, la stratification, l'enduction, la métallisation et/ou l'estampage et/ou le traitement sur des machines d'emballage.
